# EUROPÄISCHE PATENTSCHRIFT

(11) **EP 2 169 273 B1**
(45) Veröffentlichungstag und Bekanntmachung des Hinweises auf die Patenterteilung: **12.10.2011**
(21) Anmeldenummer: 09168658.4
(22) Anmeldetag: 26.08.2009
(51) Int. Cl.: F16H 61/02, F16H 61/12, F16K 11/07, B63H 23/08

(54) **Arretierungsvorrichtung für einen Ventilschieber**
Locking device for a valve spool device
Dispositif d'arrêt pour un coulisseau de soupape

(30) Priorität: 26.09.2008 DE 102008042386
(43) Veröffentlichungstag der Anmeldung: 31.03.2010
(73) Patentinhaber: ZF Friedrichshafen AG, 88038 Friedrichshafen (DE)
(72) Erfinder: Stamml, Michael, 88356, Ostrach (DE)

(56) Entgegenhaltungen:
- EP-A2- 0 310 134
- DE-A1- 19 528 974
- US-A- 3 866 880
- US-A- 4 913 190

## Beschreibung

Die Erfindung betrifft eine Arretierungsvorrichtung für einen Ventilschieber in einer hydraulischen Steuerung eines Schiffsgetriebes.

Zur Änderung der Drehrichtung des Propellers werden in der Schiffantriebstechnik so genannte Wendegetriebe eingesetzt. Hierbei wird je nach gewünschter Fahrtrichtung zur Herstellung des Kraftflusses zwischen Antriebsmotor und Propellerwelle die jeweilige Kupplung mit einem hydraulischen Druck beaufschlagt. Um das auf einen bestimmten Druck geregelte Betriebsmedium zur jeweiligen Kupplung zu lenken, wird diese durch ein Schaltventil mit einem Ventilschieber mit der Druckversorgung des Schiffsgetriebes verbunden. Der Ventilschieber wird hierbei von einem Steuerdruck bewegt, welcher von zwei Magnetventilen auf die jeweilige Seite des Ventilschiebers geschaltet wird. Zwischen den beiden Schaltstellungen für die jeweilige Fahrtrichtung kann der Ventilschieber eine dritte Stellung einnehmen, in welcher beide Kupplungen drucklos sind und damit keine Momentenübertragung zwischen Antriebsmotor und Propellerwelte stattfindet. Die Stellung wird auch als Neutralstellung bezeichnet. EP 310134 offenbart die Merkmale des Oberbegriffes des Anspruchs 1.

Eine Forderung der Klassifikationsgesellschaften für Schiffsgetriebe ist, dass die Schaltstellung einer Fahrtrichtung im Falle eines Stromausfalls erhalten bleiben muss. Im Falle des vorliegenden Schaltventils baut sich der Steuerdruck bei einem Stromabfall ab, da die Magnetventile ohne Strom eine Stellung einnehmen, in welcher die Steuerdruckversorgung vom Ventilschieber getrennt und der Steuerdruckraum am Ventilschieber mit dem drucklosen Getriebesumpf verbunden ist. Die Kraft einer Federzentrierung bewegt den Ventilschieber nach dem Wegfall des Steuerdrucks infolge des Stromausfalls in die Neutralstellung.

Hierzu ist eine hydraulische Schiffsgetriebesteuerung bekannt, bei welcher in dem Schaltventil eine mechanische Arretierungsvorrichtung angeordnet ist, um bei einem Stromausfall den Ventilschieber in dem Schaltventil in seiner zuletzt eingenommenen Schaltstellung zu arretieren. Die mechanische Arretierungsvorrichtung besteht hierbei aus einem zylindrischen Arretierstift mit einem halbkugelförmigen Ende und einem geraden Ende, auf welches eine Feder wirkt. Die Feder drückt das halbkugelförmige Ende senkrecht zur Längsachse des Ventilschiebers gegen die Außenkontur des Ventilschiebers. Hierbei sind in den Ventilschieber drei umlaufende Nuten eingedreht, welche den Betriebszuständen Vorwärts, Rückwärts und Neutral zugeordnet sind. In diese Nuten kann der federbelastete Arretierstift einrasten, so dass bei Stromausfall der Ventilschieber in seiner zuletzt eingenommenen Position arretiert ist. Im störungsfreien Betrieb muss die aus dem Steuerdruck resultierende Verstellkraft auf den Ventilschieber immer größer wie die Arretierkraft sein, da ansonsten beim Umschaltvorgang der Ventilschieber nicht mehr gegen die Arretierkraft des Arretierstiftes verschoben werden kann. Dies stellt eine hydraulische Blindleistung dar und ist hinsichtlich des Gesamtwirkungsgrades ungünstig. Nachteilig bei dieser Art der Arretierung ist zudem, dass die Federkraft der Arretierungsvorrichtung ständig eine Querkraft auf den Ventilschieber ausübt, was zu Verschleiß führen kann.

Ein weiterer Dachteil zeigt sich im Betrieb, wenn der Antriebsmotor des Schiffs abgestellt wird. Mit dem Stillstand der vom Antriebsmotor angetriebenen Getriebepumpe baut sich der Druck im gesamten hydraulischen System ab und der Ventilschieber behält mittels der mechanischen Arretierung seine zuletzt eingenommene Schaltstellung bei. Da der Antriebsmotor jedoch nur bei stehender Propellerwelle bzw. in Neutralstellung des Getriebes angelassen werden kann, muss der Ventilschieber direkt am Getriebe manuell in die Neutralstellung gebracht werden. Da hierzu der Bediener in den Maschinenraum gehen muss ist dies sehr zeitintensiv und kann deshalb in bestimmten Situationen oder Einsatzfällen sicherheitskritisch sein. Hieraus ergibt sich für die beiden Versagensfälle ein Zielkonflikt. Eine Federzentrierung des Ventilschiebers, welche den Ventilschieber bei Abstellen des Motors in die Neutralstellung bewegen würde, steht der beschriebenen Arretierung vom Stand der Technik mittels eines federbelasteten Arretierstifts entgegen, da dieser bei einem Stromausfall den Ventilschieber nicht mehr entgegen der Kraft der Zentrierfeder in der zuletzt eingenommen Schaltstellung halten könnte.

Die der Erfindung zugrunde liegende Aufgabe ist es, eine Arretierungsvorrichtung für einen Ventilschieber einer Schiffsgetriebesteuerung zu schaffen, wobei die Arretierungsvorrichtung bei einem Stromausfall die aktuelle Schaltstellung beibehält, jedoch beim Abschalten des Antriebsmotors oder einem Druckverlust im hydraulischen System die Arretierung selbsttätig löst und damit den Ventilschieber die Neutralstellung einnehmen lässt.

Diese Aufgabe wird durch die Merkmale des Patentanspruchs 1 gelöst.

Eine hydraulische Steuerung eines Schiffsgetriebes umfasst mindestens ein Schaltventil, in welchem ein Ventilschieber in unterschiedliche Schaltstellungen entlang einer Längsachse verschiebbar ist, um unterschiedliche Druckräume miteinander mit Aktuatoren zu verbinden, wie beispielsweise zur Druckbeaufschlagung von Kupplungen. In der hydraulischen Steuerung ist eine Arretierungsvorrichtung angeordnet, welche den Ventilschieber bei Stromausfall in der zuvor eingenommenen Schaltstellung arretiert. Hierdurch wird beispielsweise die gewählte Fahrtrichtung des Schiffes beibehalten. Erfindungsgemäß ist hierbei die Betätigung der Arretiervorrichtung hydraulisch wirksam, wobei die Arretierung nur in der geschalteten Stellung des Ventilschiebers besteht. In einer geschalteten Stellung des Ventilschiebers wird im Gegensatz zur Neutralstellung ein Aktuator, wie beispielsweise eine Kupplung, mit einem Druck beaufschlagt. Während einem Schaltvorgang ist die Arretierung gelöst, so dass der Ventilschieber nicht während seiner Verschiebung von einer Querkraft belastet wird, was mit erhöhter Reibung und Verschleiß verbunden wäre.

Vorteilhafte Ausgestaltungen der Erfindung ergeben sich aus den Unteransprüchen.

In Weiterbildung des erfindungsgemäßen Gegenstandes umfasst die Arretiervorrichtung mindestens einen von einem Druck beaufschlagbaren Arretierkolben und mindestens eine den Arretierkolben vorspannende Feder. Hierbei ist der Arretierkolben in einer Bohrung geführt, wobei die Längsachse des Arretierkolbens quer zur Längsachse des Ventilschiebers angeordnet ist.

In einer vorteilhaften Ausgestaltung der Erfindung ist die Arretierung des Ventilschiebers als reibschlüssige Verbindung zwischen einem Arretierbolzen und dem Ventilschieber ausgeführt. Dies bietet den Vorteil, dass der Ventilschieber keine besondere Außenkontur zur Arretierung aufweisen muss

In einer alternativen Ausführung ist die Arretierung des Ventilschiebers als formschlüssige Verbindung zwischen einem Arretierbolzen und dem Ventilschieber ausgeführt.

In diesem Zusammenhang sieht eine Ausgestaltungsform vor, dass der Arretierbolzen in Richtung der Längsachse des Arretierkolbens an einem ersten Ende des Arretierkolbens ausgebildet ist, wobei die Längsachse des Arretierkolbens quer zur Längsachse des Ventilschiebers angeordnet ist.

Außerdem kann in einer alternativen Ausgestaltung der Erfindung vorgesehen sein, dass der Arretierbolzen als separates Teil konzentrisch zum Arretierkolben und in diesem längsbeweglich geführt angeordnet ist und von einer zweiten Feder gegen einen am Arretierkolben ausgebildeten Anschlag vorgespannt ist.

In Weiterbildung der alternativen Ausführung ist die Länge des Arretierbolzens so gewählt, dass dieser nicht die Außenkontur des Ventilschiebers berührt und die formschlüssige Arretierung des Ventilschiebers nur axial wirksam ist. Hierdurch kann keine unerwünschte Querkraft in den Ventilschieber eingeleitet werden.

In einer vorteilhaften Ausbildung des erfindungsgemäßen Gegenstandes wird von einer ersten Seite des Arretierkolbens und einer von ersten Innenkontur ein erster Druckraum und von einer zweiten Seite des Arretierkolbens und einer zweiten Innenkontur ein zweiter Druckraum gebildet. Hierbei werden die erste und die zweite Innenkontur von einem oder mehreren Bauteilen gebildet.

In diesem Zusammenhang sieht eine weitere Ausgestaltungsform vor, dass der erste Druckraum der Arretierungsvorrichtung mit einem Wegeventil verbunden ist. Parallel zu diesem ist der erste Druckraum in einer ersten Schaltstellung des Ventilschiebers mit mindestens einem entlüfteten Druckraum und in mindestens einer zweiten Schaltstellung des Ventilschiebers mit mindestens einem druckbeaufschlagten Aktuator verbunden.

Eine weitere Ausgestaltung der Erfindung sieht vor, dass der zweite Druckraum der Arretierungsvorrichtung in einer ersten Stellung des Arretierkolbens einen gleichen oder höheren Druck aufweist wie der erste Druckraum und in einer zweiten Stellung des Arretierkolbens einen geringeren Druck aufweist wie der erste Druckraum.

Eine alternative Ausgestaltung hierzu zeigt, dass der erste Druckraum der Arretierungsvorrichtung in einer ersten Schaltstellung des Ventilschiebers mit mindestens einem entlüfteten Druckraum und in mindestens einer zweiten Schaltstellung des Ventilschiebers mit mindestens einem druckbeaufschlagten Aktuator verbunden ist. Der zweite Druckraum der Arretierungsvorrichtung ist hierbei mit einem Wegeventil verbunden, wobei der zweite Druckraum je nach Schaltstellung des Wegeventils entlüftet oder mit einem Druck beaufschlagt ist.

In einer vorteilhaften Ausführung der Erfindung löst sich die Arretierungsvorrichtung bei einem Absinken eines Druckes im hydraulischen System, wie es beispielsweise beim Abstellen des Antriebsmotors der Fall ist, bei Unterschreitung eines unteren Grenzwerts selbsttätig. Hierdurch kann der Ventilschieber eine für diesen Betriebszustand gewünschte Stellung einnehmen. Dies hat den Vorteil dass im Vergleich zum Stand der Technik keine manuelle Verstellung des Ventilschiebers direkt am Getriebe erfolgen muss, um den Ventilschieber in die für diesen Betriebszustand gewünschte Stellung zu bringen.

Ausführungsbeispiele der Erfindung sind in den Zeichnungen dargestellt und werden im Folgenden näher beschrieben.

Es zeigen
- Fig. 1: ein Schaltventil einer Schiffsgetriebesteuerung nach dem Stand der Technik;
- Fig. 2: ein erfindungsgemäßes Schaltventil mit einer reibschlüssigen Arretierungsvorrichtung in Neutralstellung;
- Fig. 3: ein erfindungsgemäßes Schaltventil mit einer reibschlüssigen Arretierungsvorrichtung in Schaltstellung mit einer geschlossenen Kupplung;
- Fig. 4: eine erfindungsgemäße reibschlüssige Arretierungsvorrichtung in Schaltstellung mit einer geschlossenen Kupplung;
- Fig. 5: ein erfindungsgemäßes Schaltventil mit einer formschlüssigen Arretierungsvorrichtung in Neutralstellung;
- Fig. 6: eine formschlüssige Arretierungsvorrichtung in Neutralstellung;
- Fig. 7: eine formschlüssige Arretierungsvorrichtung in geschaltetem Zustand und
- Fig. 8: eine formschlüssige Arretierungsvorrichtung in gelöstem Zustand.

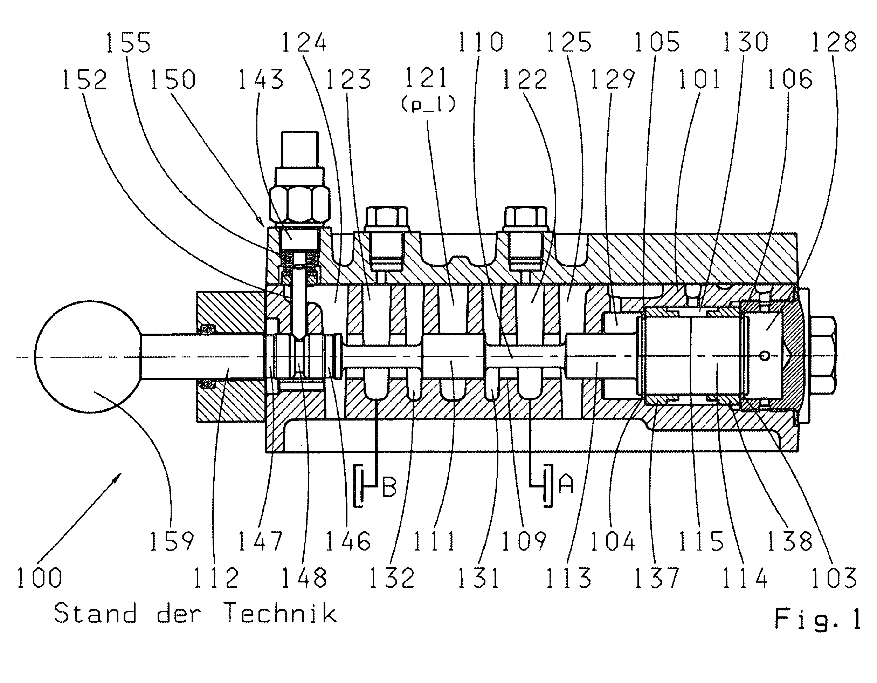

Fig. 1 zeigt eine Schnittdarstellung eines Schaltventils 100 einer Schiffsgetriebesteuerung nach dem Stand der Technik zum Umschalten der Drehrichtung der Propellerweite. Hierbei ist ein Ventilschieber 110 längsbeweglich in einer Ventilbohrung 109 in einem Steuergehäuse 101 angeordnet. Der Ventilschieber 110 weist zwei unterschiedliche Außendurchmesser auf, wobei der Teil des Ventilschiebers 110 mit dem kleineren Außendurchmesser an zwei Stellen von zwei Querschnittsverringerungen reduziert ist. Durch die Querschnittsverringerungen werden drei Kolbenabschnitte 111, 112 und 113 gebildet, welche je nach Stellung des Ventilschiebers 110 unterschiedliche Druckräume öffnen, verschließen, miteinander verbinden oder voneinander trennen.

Die Ventilbohrung 109 wird von sieben Druckräumen durchdrungen. Ein Druckraum 121 steht hierbei unter einem Schaltdruck p_1, welcher eine Kupplung A oder eine Kupplung B beaufschlagen soll, um den Kraftschluss zwischen Antriebsmotor und Propellerwelle herzustellen. Der Schaltdruck p_1 kann hierbei konstant sein oder über der Zeit veränderlich geregelt werden. Ein Druckraum 122 ist mit der Kupplung A und ein Druckraum 123 mit der Kupplung B verbunden. Ein Druckraum 124 und ein Druckraum 125 sind jeweils mit einem nicht gezeigten Getriebeinnenraum verbunden und damit praktisch drucklos. Eine hydraulische Verbindung mit dem Getriebeinnenraum wird nachfolgend auch als Entlüftung bezeichnet. Ist ein betreffender Raum, ein Anschluss oder eine Leitung mit dem Getriebeinnenraum verbunden, so gelten diese nachfolgend als entlüftet. Ein Druckraum 131 und ein Druckraum 132 sind parallel zu dem Druckraum 122 und dem Druckraum 123 mit den Kupplungen A bzw. B verbunden und dienen beispielsweise als Abschlüsse für eine Rückmeldung zu einer hydraulischen Regeleinrichtung.

Der Kolbenabschnitt 111 verschließt in der dargestellten Neutralstellung den Druckraum 121. Der Kolbenabschnitt 112 und der Kolbenabschnitt 113 öffnen die Druckräume 124 und 125 zu den Druckräumen 122, 123, 131 und 132 wodurch diese entlüftet sind.

Ein Kolbenabschnitt 114, welcher den größeren Außendurchmesser am Ventilschieber 110 aufweist, kann durch einen Steuerdruckraum 128, einen Steuerdruckraum 129 oder einen Steuerdruckraum 130 mit einem Steuerdruck p_2 beaufschlagt werden, wodurch der Ventilschieber 110 verschoben wird.

Auf einer äußeren Mantelfläche 115 des Kolbenabschnitts 114 sind zwischen zwei Anschlägen 103 und 104 an dem Kolbenabschnitt 114 eine Hülse 137 und eine Hülse 138 verschiebbar angeordnet. Darüber hinaus sind die beiden Hülsen 137 und 138 an einer zylindrischen Innenkontur des Steuergehäuses 101 verschiebbar zwischen einem Gehäuseanschlag 105 und einem Gehäuseanschlag 106 angeordnet und führen somit den Ventilschieber 110 an der Niantelfläche 115 seines zweiten Außendurchmessers.

Der Kolbenabschnitt 112 weist drei Arretiernuten zur formschlüssigen Arretierung sowie einen Kugelknopf 159 auf, wobei eine Arretiernut 146 und eine Arretiernut 147 gleich gestaltet sind und eine zwischen diesen angeordnete Arretiernut 148 etwas tiefer in den Ventilschiebers 110 eingedreht ist. Der Kolbenabschnitt 113 führt den Ventilschieber 110 und dichtet den Druckraum 125 zu dem Steuerdruckraum 129 ab.

Im Steuergehäuse 101 ist im Bereich des Kolbenabschnitts 112 eine Arretierungsvorrichtung 150 angeordnet, welche einen von einer Arretierfeder 155 vorgespannten Arretierstift 152 umfasst, der senkrecht zur Längsachse des Ventilschiebers 110 gegen diesen gedrückt wird. In den Anschlagstellungen und der Neutralstellung kann der Arretierstift 152 in die jeweilige Arretiernut einrasten. In der Arretierungsvorrichtung 150 ist ein elektrischer Neutralschalter 143 angeordnet. Wenn der Arretierstift 152 in der Neutralstellung in die tiefer ausgedrehte Arretiernut 148 einrastet, wird durch dessen größeren Hub der Neutralschalter 143 betätigt und so die Neutralstellung angezeigt.

In der Zeichnung ist der Ventilschieber 110 in der so genannten Neutralstellung dargestellt. Soll der Ventilschieber 110 aus dieser beispielsweise nach links verschoben werden, um den Druckraum 121 mit dem Druckraum 122 zu verbinden und damit die Kupplung A mit dem Schaltdruck p_1 zu beaufschlagen, wird mittels eines nicht dargestellten Vorsteuerventils der Steuerdruckraum 128 mit einem Steuerdruck p_2 beaufschlagt. Die Steuerdruckräume 129 und 130 sind hierbei entlüftet. Der Ventilschieber 110 kann so weit verschoben werden, bis der Anschlag 104 die Hülse 138 gegen die Hülse 137 drückt, welche sich wiederum an dem Gehäuseanschlag 105 abstützt. Der maximale Hub des Ventilschiebers 110 ergibt sich somit aus dem Abstand zwischen den Anschlägen 103 und 104 abzüglich der Summe der Längen der beiden Hülsen 137 und 138.

Soll nun die Drehrichtung der Propellerwelle umgekehrt und damit die Fahrtrichtung geändert werden, wird der Steuerdruckraum 129 mit dem Steuerdruck p_2 beaufschlagt und die Steuerdruckräume 128 und 130 entlüftet, so dass der Ventilschieber 110 nach rechts gegen die analogen Anschläge der Hülsen verschoben wird.

Beim Schalten in die Neutralstellung werden die nicht dargestellten Vorsteuerventile so geschaltet, dass die Steuerdruckräume 128 und 129 entlüftet sind und der Steuerdruckraum 130 mit dem Steuerdruck p_2 beaufschlagt wird. Hierdurch werden die beiden Hülsen 137 und 138 auseinander gegen die beiden Gehäuseanschläge 105 und 106 und die Anschläge 103 und 104 gedrückt. Der Kolbenabschnitt 111 nimmt dann eine mittlere Stellung ein, in welcher der Druckraum 121 verschlossen ist und der Schaltdruck p_1 weder die Kupplung A die Kupplung B beaufschlagen kann. Aufgrund der Lage der Kolbenabschnitte 112 und 113 sind die Kupplungen A und B mit den Druckräumen 124 und 125 verbunden und damit entlüftet.

Bei einem Stromausfall des Systems nehmen die elektrisch betätigten Vorsteuerventile eine Stellung ein, in welcher die Steuerdruckräume 128, 129 und 130 entlüftet sind, wodurch keine hydraulische Kraft auf den Kolbenabschnitt 114 und damit auf den Ventilschieber 110 wirken kann. In der Schaltstellung, welche der Ventilschieber 110 unmittelbar vor dem Stromausfall eingenommen hat, ist der Arretierstift 152 der Arretierungsvorrichtung 150 in die Arretiernut 146 oder 147 eingerastet, wodurch der Ventilschieber 110 in seiner Stellung bleibt und die zuvor gewählte Fahrtrichtung beibehalten wird. Nachteilig ist, dass der Arretierstift 152 permanent auf den Ventilschieber 110 drückt und damit eine Querkraft ausübt. Dies kann zu Verschleiß am Ventilschieber 110 führen. Darüber hinaus findet eine Schaltung bzw. Verschiebung des Ventilschiebers 110 immer gegen den Widerstand der Arretierungsvorrichtung 150 statt. Bei jeder Schaltung wird der Arretierstift 152 mittels der Arretiernuten zurückgedrückt und gleitet federbelastet auf dem Ventilschieber 110 entlang, was ebenfalls über die Dauer der Betriebszeit zu Verschleiß führen kann.

Ein anderer Fall ist das Abstellen des Antriebsmotors des Schiffs ohne vorherige Schaltung des Schaltventils 100 in die Neutralstellung. Durch den mit dem Motorstillstand einhergehenden Stillstand der Schiffsgetriebepumpe bauen sich alle Drücke ab, was nach hinreichend langer Zeit einer Entlüftung aller Druckräume gleich kommt. Aufgrund der Arretierung mittels des in der Arretiernut 146 oder 147 eingerasteten Arretierstifts 152 bleibt der Ventilschieber 110 in der unmittelbar vor dem Motorstillstand eingenommenen Stellung, die entweder der Vorwärts- oder Rückwärtsfahrt entspricht. Aus Sicherheitsgründen kann der Motor aber nur in der Neutralstellung angelassen werden, so dass der Ventilschieber 110 manuell direkt am Schiffsgetriebe in Neutralstellung zu bringen ist. Zu diesem Zweck ragt ein Ende des Ventilschiebers 110 mit dem Kolbenabschnitt 112 ins Freie und trägt einen dort zur Betätigung des Ventilschiebers 110 angeordneten Kugelknopf 159. Die hierfür erforderliche Prozedur ist zeitintensiv und in Notfällen sicherheitskritisch.

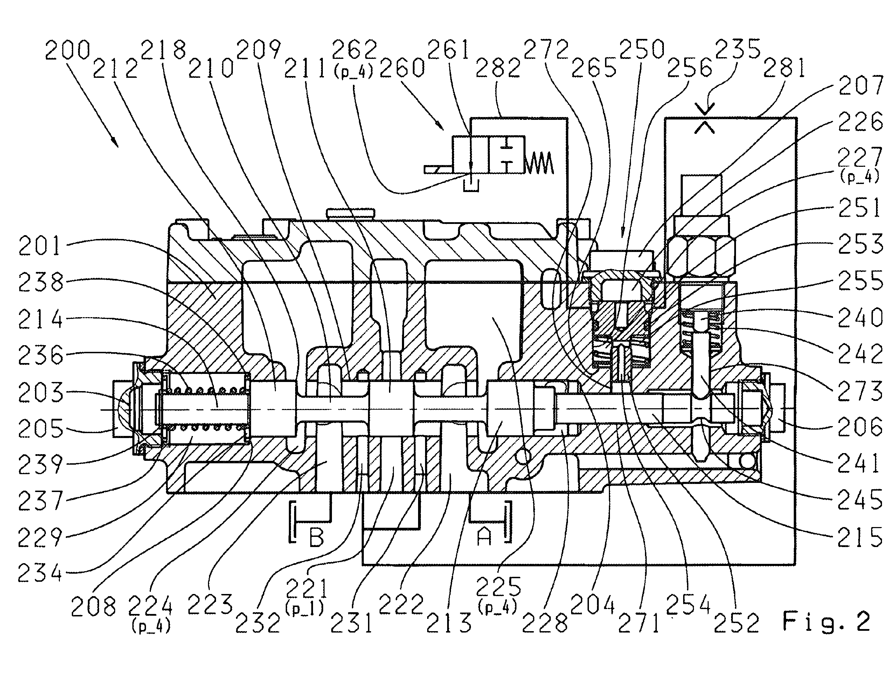

Fig. 2 zeigt die Schnittdarstellung eines erfindungsgemäßen Schaltventils 200 in Neutralstellung. Im Steuergehäuse 201 einer Schiffsgetriebesteuerung ist in einer Ventilschieberbohrung 209 ein Ventilschieber 210 längsbeweglich zwischen einem Anschlag 203 an einer Verschlussschraube 205 und einem Anschlag 204 an einem Gehäuseabsatz verschiebbar angeordnet. Alternativ hierzu kann auch eine Verschlussschraube 206 an Stelle des Gehäuseabsatzes als Anschlag dienen. An seinen Enden ist der Durchmesser des Ventilschiebers 210 reduziert, wodurch an einem Ende ein Zentrierfederzapfen 214 und an einem anderen Ende ein Arretierungszapfen 215 ausgebildet sind. Zwei Querschnittsverringerungen in der zylindrischen Außenkontur des Ventilschiebers bilden drei Kolbenabschnitte 211, 212 und 213.

Die Ventilschieberbohrung 209 wird von fünf Druckräumen durchdrungen. Ein Druckraum 221 wird hierbei von einem nicht gezeigten Ölversorgungssystem mit dem Schaltdruck p_1 beaufschlagt. Ein Druckraum 222 ist mit einer Kupplung A und ein Druckraum 223 mit einer Kupplung B verbunden. Zwei Druckräume 224 und 225 sind jeweils entlüftet.

Der Kolbenabschnitt 212 führt den Ventilschieber 210 und dichtet den Druckraum 223 gegen einen Steuerdruckraum 229, der bei der Schaltung der Kupplung B über ein zugehöriges Vorsteuerventil mit einem Steuerdruck p_2 beaufschlagt wird. Der Kolbenabschnitt 213 trägt ebenfalls zur Führung des Ventilschiebers 210 bei und dichtet bei der Schaltung der Kupplung A einen mit dem Steuerdruck p_2 beaufschlagbaren Steuerdruckraum 228 gegen den Druckraum 222. Rechts an den Kolbenabschnitt 213 schließt sich der Arretierungszapfen 215 an, welcher in einer Führungsbohrung 271 geführt ist. In den Arretierungszapfen 215 ist eine Positionsnut 245 eingedreht. Konzentrisch um den Zentrierfederzapfen 214 am linken Ende des Ventilschiebers 210 ist eine Zentrierfeder 236 zwischen einer Federscheibe 237 und einer Federscheibe 238 vorgespannt angeordnet. Die Federscheibe 237 stützt sich hierbei unter der Vorspannkraft der Zentrierfeder 236 gegen einen Sicherungsring 239 am Ende des Ventilschiebers 210 ab. Die Federscheibe 238 wird von der Vorspannkraft der Zentrierfeder 236 gegen den Kolbenabschnitt 212 vorgespannt. Die beiden ringförmigen Federscheiben 237 und 238 weisen über dem Umfang mehrere axiale Durchbrüche 234 auf, welche beispielsweise als Bohrungen ausgebildet sind.

Im rechten Winkel zur Längsachse des Ventilschiebers 210 wird diese von einer Mittelachse einer Arretierungsvorrichtung 250 geschnitten. Die Arretierungsvorrichtung 250 umfasst einen Arretierkolben 251, an welchem konzentrisch zu dessen Mittelachse ein Arretierbolzen 252 ausgebildet ist. Der Arretierkolben 251 ist einer Senkbohrung 256 geführt, welche im Steuergehäuse 201 ausgebildet ist. Die Senkbohrung 256 und die Führungsbohrung 271 sind durch eine Führungsbohrung 272 miteinander verbunden, in welcher der Arretierbolzen 252 geführt ist. Der Arretierkolben 251 wird von einer Kolbenfeder 255 gegen eine Verschlussschraube 207 vorgespannt, wobei zwischen dem Arretierkolben 251 und der Verschlussschraube 207 ein Druckraum 226 ausgebildet ist, welcher durch eine schematisch dargestellte Leitung 281 mit den Anschlüssen 231 und 232 sowie über eine Leitung 282 mit einem elektrisch betätigbaren Schaltventil, nachfolgend als Neutralventil 260 bezeichnet, verbunden ist. Das Neutralventil 260 verbindet im bestromten Zustand durch die Leitung 282 den Druckraum 226 mit einem entlüfteten Ventilanschluss 262. Im stromlosen Zustand verschließt das Neutralventil 262 die Leitung 282. Ein zwischen dem Arretierkolben 251 und einer Senkgrundfläche 265 ausgebildeter Druckraum 227 ist permanent entlüftet, was nicht dargestellt ist. Ein an dem Arretierkolben 251 angeordneter Dichtring 253 dichtet den Druckraum 226 gegen den Druckraum 227 ab. In dem Arretierbolzen 252 sind Verbindungskanäle 254 ausgebildet, durch welche die Führungsbohrung 272 mit dem Druckraum 227 verbunden und damit entlüftet ist.

Zur Erfassung der Neutralstellung ist in dem Steuergehäuse 201 ein Neutralschalter 243 angeordnet, welcher von einem einer Führungsbohrung 244 geführten Taststift 241 betätigt wird. Der Taststift 241 ist mit seiner Längsachse senkrecht zur Längsachse des Ventilschiebers 210 angeordnet und wird mit seinem halbkugelförmigen Ende von einer vorgespannten Schalterfeder 242 gegen den Arretierungszapfen 215 des Ventilschiebers 210 gedrückt.

Die Funktionen zum Arretieren des Ventilschiebers und zum Betätigen des Neutralschalters sind hier im Gegensatz zum Stand der Technik aus Fig. 1 getrennt, so dass die auf den Taststift 241 wirkende Federkraft deutlich geringer als beim Stand der Technik ausgelegt sein kann. Hierdurch ist im Vergleich zum Stand der Technik auch die auf den Ventilschieber 210 wirkende Querkraft wesentlich kleiner. In der gezeigten Darstellung befindet sich der Ventilschieber 210 in der Neutralstellung, wobei sich die Positionsnut 245 für die Neutralstellung direkt unter dem Taststift 241 befindet. Der Taststift 241 wird von der Schatterfeder 242 in die Positionsnut 245 gedrückt und fährt gegenüber den anderen Schaltstellungen weiter aus, wodurch sich die Schaltposition des Neutralschalters 243 ändert. Das elektrische Signal wird an eine elektronische Steuerungseinheit oder ein Bedienpult ausgegeben, wo es die Neutralstellung anzeigt. Zur Vermeidung der Querkräfte infolge der auf den Taststift 241 wirkenden Schalterfeder 242 wäre alternativ hierzu auch eine berührungslose Positionserfassung, beispielsweise nach induktivem Prinzip, denkbar.

In der Neutralstellung sind die magnetischen Vorsteuerventile stromlos, wodurch die Steuerdruckräume 228 und 229 entlüftet sind. Es wirkt somit keine hydraulische Axialkraft auf den Ventilschieber 210 und die Zentrierfeder 236 hält den Ventilschieber 210 in seiner mittleren Position. Der Kolbenabschnitt 211 verschließt den Druckraum 221 und trennt diesen somit von den anderen Druckräumen.

Aufgrund der axialen Lage der Kolbenabschnitte 211, 212 und 213 des Ventilschiebers 210 sind Druckräume 222 und 223 sowie die Anschlüsse 231 und 232 und damit der Druckraum 226 mit dem jeweils entlüfteten Druckraum 224 und Druckraum 225 verbunden und damit drucklos.

Hierdurch sind die Kupplungen A und B drucklos und es findet keine Momentenübertragung zur Propellerwelle statt. Das Neutralventil 260 ist bestromt, wodurch der Druckraum 226 über dem Arretierkolben 251 unmittelbar entlüftet und damit drucklos ist, so dass die Kolbenfeder 255 den Arretierkolben 251 nach oben gegen die Verschlussschraube 207 drückt. Der Arretierbolzen 252 berührt den Arretierungszapfen 215 des Ventilschiebers nicht 210, so dass die Arretierung nicht aktiv ist. Durch die Verbindung des Druckraums 226 mit den Anschlüsse 231 und 232 durch die Leitung 281 ist dieser zusätzlich entlüftet. Deshalb kann in einer dauerhaften Neutralstellung der Neutralschalter 260 auch stromlos sein. Lediglich vor einer Schaltung in die Neutralstellung ist ein kurzer Stromimpuls zum Lösen der Arretierung erforderüch. Wird beispielsweise von dem Bootsführer ein Schaltvorgang durch Betätigung einer Schaltvorrichtung eingeleitet, sendet die elektronische Steuerungseinheit selbsttätig einen Stromimpuls an das Neutralventil um die Arretierung zu lösen.

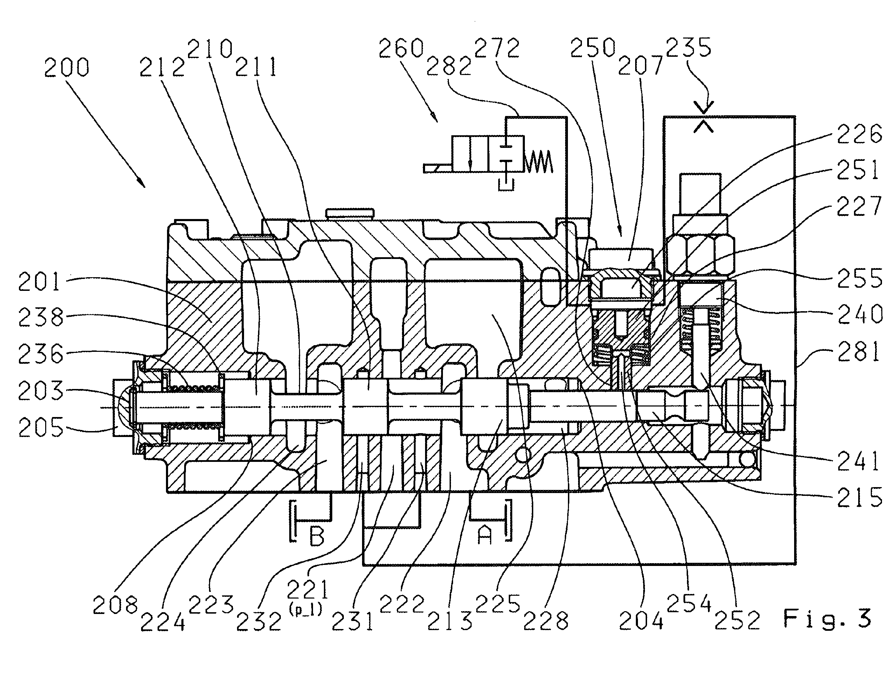

In Fig. 3 ist das Schaltventil 200 einer Schiffsgetriebesteuerung in der Schaltstellung dargestellt, in welcher die Kupplung A mit dem Schaltdruck p_1 beaufschlagt wird. Zu Beginn der Schaltung aus der unter Fig. 2 beschriebenen Neutralstellung heraus wird durch Bestromen des betreffenden, nicht dargestellten Vorsteuerventils der Steuerdruckraum 228 von einem Steuerdruck p_2 beaufschlagt und der Ventilschieber 210 gegen die Kraft der Zentrierfeder 236 an den ersten Anschlag 203 gedrückt. Beim Zusammendrücken der Zentrierfeder wird der Abstand zwischen den Federscheiben 237 und 238 geringer, wobei das zwischen diesen eingeschlossene Betriebsmedium durch die Durchbrüche 234 entweichen kann. Somit kann das eingeschlossene Betriebsmedium nicht komprimiert werden, was zu einer starken Erhöhung der zur Verstellung des Ventilschiebers 210 erforderlichen Kraft, bzw. des erforderlichen Steuerdrucks p_2 führen würde.

Die Kolbenabschnitte 211, 212 und 213 stehen nun so, dass der unter dem Schaltdruck p_1 stehende Druckraum 221 mit dem Druckraum 222 und dem Anschluss 231 verbunden ist. Über den Druckraum 222 wird die Kupplung A mit dem Schaltdruck p_1 beaufschlagt und geschlossen, wodurch der Antriebsmotor des Schiffs die Propellerwelle antreiben kann. Der Kolbenabschnitt 212 steht so, dass die Kupplung B und der mit dieser in Verbindung stehende Druckraum 223 mit dem entlüfteten Druckraum 224 verbunden ist. Der Kolbenabschnitt 221 verschließt den Anschluss 232, so dass die Leitung 281 nicht entlüftet ist. Der Kolbenabschnitt 213 trennt den entlüfteten Druckraum 225 vom Druckraum 222. Der Anschluss 231 ist durch die Leitung 281 mit dem Druckraum 226 in der Arretierungsvorrichtung 250 verbunden. Das Neutralventil 260 an einem Ende der Leitung 282 ist stromlos geschlossen, so dass sich nun im Druckraum 226 der Schaltdruck p_1 aufbauen kann.

Der Arretierkolben 251 wird hierdurch gegen die Kolbenfeder 255 aus seiner oberen Anschlagstellung an der Verschlussschraube 207 bewegt und drückt den Arretierbolzen 252 entgegen der Kraft der Kolbenfeder 255 gegen den Arretierungszapfen 215. Hierdurch ist der Ventilschieber 210 in seiner Schaltstellung arretiert. Lecköl, welches sich unter Umständen in der Führungsbohrung 272 zwischen dem Arretierungszapfen 215 und dem Arretierbolzen 252 befindet, kann bei der Abwärtsbewegung der Arretierbolzens 252 durch die Entlüftungskanäle 254 in den entlüfteten Druckraum 227 gelangen und zum Getriebeinnenraum entweichen. Damit der Ventilschieber 210 bei seiner Schaltbewegung aus der Neutralstellung heraus nicht vor dem Erreichen der durch den Anschlag 203 bestimmten Schaltposition arretiert wird, ist in der Leitung 281 eine Blende 235 vor dem Druckraum 226 angeordnet, welche den Druckaufbau in diesem verzögert. Bei der Verschiebung des Ventilschiebers 210 nach links wird der Taststift 241 aus der Positionsnut 245 gedrückt und durch die Betätigung des Neutralschalters 243 das Neutral-Signal ausgeschaltet.

Die Schaltung zur Druckbeaufschlagung der Kupplung B erfolgt analog aus der Neutralstellung. Hierbei wird der Steuerdruckraum 229 durch ein nicht gezeigtes Vorsteuerventil mit einem Steuerdruck p_2 beaufschlagt und bei der Bewegung des Ventilschiebers 210 die Zentrierfeder 236 über ein Anliegen der Federscheibe 238 gegen eine Anschlagkante 208 im Steuergehäuse 201 zusammengedrückt. In der Schaltstellung für die Kupplung B liegt der Ventilschieber 210 an dem Anschlag 204 an und der Druckraum 223 ist mit dem Druckraum 221 verbunden. Die Kupplung B wird über den Druckraum 223 mit dem Schaltdruck p_1 beaufschlagt und geschlossen. Das Neutralventil 260 ist stromlos und damit geschlossen. Durch den Anschluss 232 und die Leitung 281 steht der Druckraum 226 unter dem Schaltdruck p_1, wodurch der Arretierbolzen 252 mittels des Arretierkolbens 251 gegen den Arretierungszapfen 215 gedrückt und der Ventilschieber 210 arretiert wird.

Fällt nun in der dargestellten Schaltstellung der Kupplung A der Strom in der Schiffsgetriebesteuerung aus, wird der Steuerdruckraum 228 entlüftet und damit drucklos. Das Neutralventil 260 bleibt stromlos geschlossen. Der Druckraum 222 und damit die Kupplung A sowie der Druckraum 226 sind weiterhin von dem Schaltdruck p_1 beaufschlagt, wodurch der Arretierbolzen 252 immer noch gegen den Arretierungszapfen 215 drückt und somit die Arretierung bestehen bleibt. Eine mittels des Arretierbolzens 252 am Ventilschieber 210 erzeugte und in dessen Längsrichtung wirkende Reibkraft ist größer als die Kraft der gegen die Verschlussschraube 205 vorgespannten Zentrierfeder 236. Somit bleibt der Ventilschieber 210 bei Stromausfall wie gewünscht in der Schaltposition für die Kupplung A.

Beim Abstellen oder Absterben des Motors soll die Schiffsgetriebesteuerung nach Neutral schalten, da ein Starten des Motors nur in Neutralstellung möglich ist. Wird nun in der gezeigten Schaltstellung der Kupplung A der Motor abgestellt, bauen sich alle Drücke aufgrund innerer Leckagen in der Druckölversorgung und der Schiffsgetriebesteuerung ab, nach hinreichend langer Zeit bis auf Umgebungsdruck. Während dem Absinken des Schaltdrucks p_1 im Druckraum 226 verringert sich die Anpressung des Arretierbolzens 252 auf den Arretierungszapfen 215. Bei Unterschreitung eines bestimmten Schaltdrucks p_1 und damit einer bestimmten Anpresskraft überwiegt die Vorspannkraft der gegen die Verschlussschraube 205 zusammengedrückten Zentrierfeder 236 und der Ventilschieber 210 wird von der Zentrierfeder 236 in die Neutralstellung bewegt.

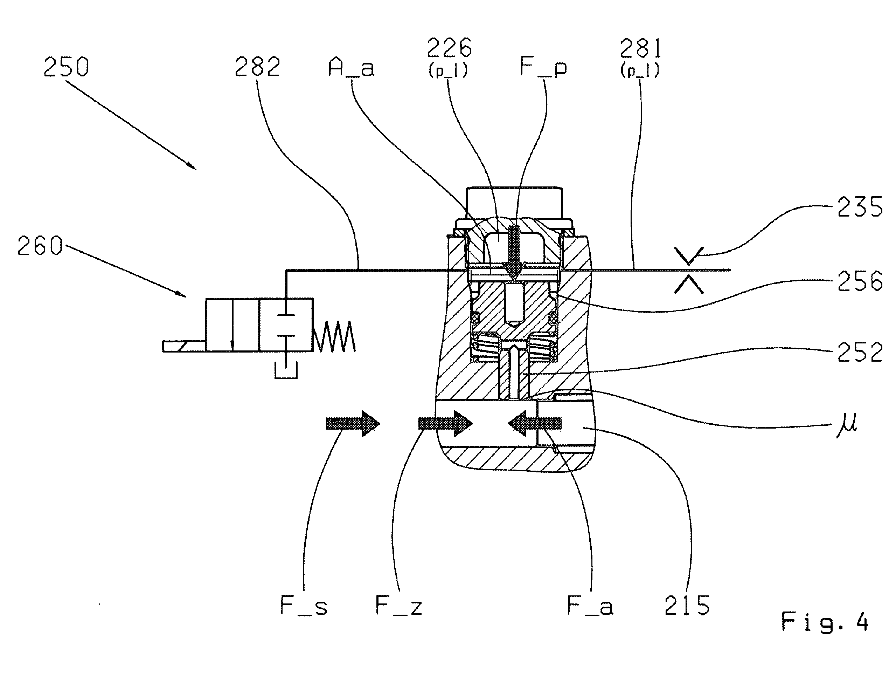

Fig. 4 zeigt eine Schnittzeichnung der Arretierungsvorrichtung 250 in geschalteter Stellung, d.h. bei druckbeaufschlagter Kupplung und arretiertem Ventilschieber 210, mit Darstellung der Kraftverhältnisse bei der Arretierung. Eine Anpresskraft F_p des Arretierbolzens 252 auf den Arretierungszapfen 215 ergibt sich aus dem Schaltdruck p_1 in dem Druckraum 226 und einer von dem Schaltdruck p_1 beaufschlagten Arretierkolbenfläche A_a sowie der Federkennlinie der entgegen dem Schaltdruck p_1 wirkenden Kolbenfeder 255. Die Arretierkolbenfläche A_a errechnet sich aus dem Durchmesser des Arretierkolbens 215 bzw. dem Durchmesser der Senkbohrung 256. Eine untere Grenze der Anpresskraft F_p ist dabei so gewählt, dass eine Reibkraft F_a, die sich infolge der Anpressung des Arretierbolzens 252 an den am Ventilschieber 210 ausgebildeten Arretierzapfen 215 unter Berücksichtigung eines Haftreibungskoeffizienten µ ergibt, größer ist als beispielsweise eine Zentrierkraft F_z der Zentrierfeder 236, welche in Schaltstellung gegen die erste Verschlussschraube 205 zusammengedrückt ist. Eine obere Grenze der Anpresskraft wird für einen bestimmten Anwendungsfall von der Forderung bestimmt, den Ventilschieber 210 auch dann betätigen zu können, wenn sich das Neutralventil 260 nicht mehr bestromen lässt und die Arretierung bestehen bleibt. In diesem Falle muss es möglich sein, den Ventilschieber 210 mittels des Steuerdrucks p_2 gegen die arretierende Reibkraft F_a zu verschieben. Eine Verschiebung des Ventilschiebers 210 entgegen der Arretierung wird auch als Überdrücken der Arretierung bezeichnet. So ist die arretierende Reibkraft F_a kleiner zu wählen als eine auf den Ventilschieber 210 wirkende Steuerdruckkraft F_s, welche sich aus einer druckbeaufschlagten Querschnittsfläche des Ventilschiebers 210 und dem Steuerdruck p_2 ergibt.

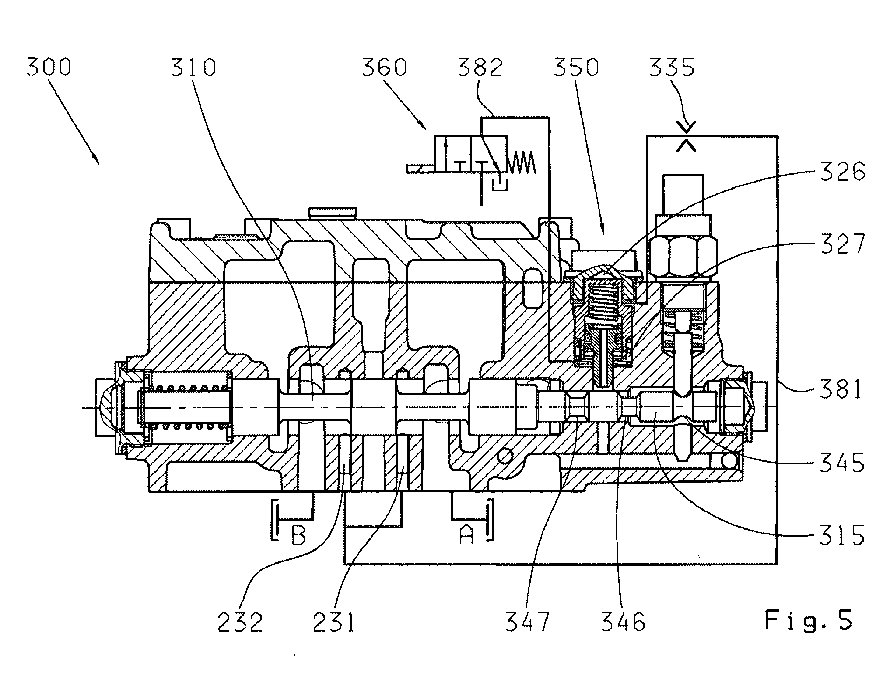

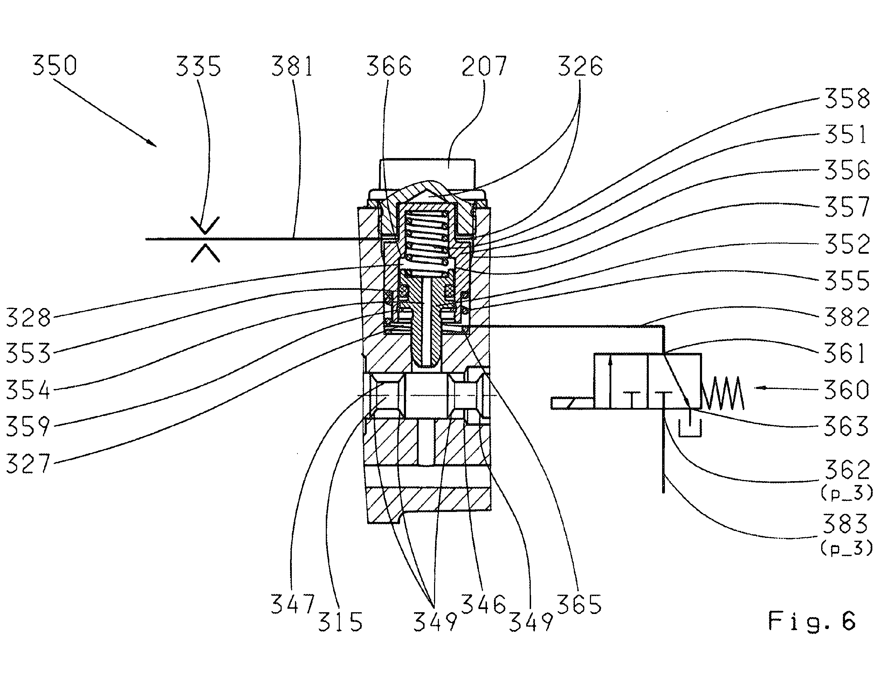

In Fig. 5 ist die Schnittzeichnung eines Schaltventils 300 einer Schiffsgetriebesteuerung in Neutralstellung mit einer Arretierungsvorrichtung 350 dargestellt. Zusätzlich ist die hydraulische Absteuerung der Arretierungsvorrichtung 350 schematisch dargestellt. Die Funktion der Ansteuerung zweier Kupplungen A und B mittels eines Ventilschiebers 310 wurde bereits unter Fig. 2 und 3 analog mit dem Ventilschiebers 210 beschrieben. Unterschiede zwischen dem Schaltventil 200 und dem Schaltventil 300 zeigen sich in der Arretierungsvorrichtung 350 selbst sowie in deren Ansteuerung und einem zur Ansteuerung dienenden Neutralventil 360. Zudem weist aufgrund der formschlüssigen Arretierung der Arretierungszapfens 315 zusätzlich zu einer Positionsnut 345 eine Arretiernut 346 und eine Arretiernut 347 auf. In der Darstellung befindet sich der Ventilschieber 310 in der Neutralstellung. Die Anschlüsse 231 und 232 sind durch eine Leitung 381 mit einem Druckraum 326 verbunden, wobei in der Leitung 381 eine Drossel 335 angeordnet ist. Eine Leitung 382 verbindet einen Druckraum 327 der Arretierungsvorrichtung 350 mit dem Neutralventil 360. Auf das Zusammenwirken der Arretierungsvorrichtung 350 mit dem Neutralventil 360 in den unterschiedlichen Betriebszuständen wird unter Fig. 6 bis 8 eingegangen.

Fig. 6 zeigt eine Schnittdarstellung der Arretierungsvorrichtung 350 in Neutralstellung mit schematischer Darstellung deren hydraulischer Ansteuerung. Die Arretierungsvorrichtung 350 umfasst einen Arretierkolben 351, welcher in einer Senkbohrung 356 längsbeweglich zwischen einer Senkgrundfläche 365 und einer Verschlussschraube 307 geführt ist. Zwischen dem Arretierkolben 351 und der Verschlussschraube 307 ist ein Druckraum 326 und zwischen dem Arretierkolben 351 und der Senkgrundfläche 365 ein Druckraum 327 ausgebildet. Der Druckraum 326 ist hierbei durch eine Leitung 381 mit den Anschlüssen 231 und 232 des Schaltventils 300 verbunden, wobei die Leitung 381 eine Blende 335 aufweist. Der Druckraum 327 ist durch eine Leitung 382 mit einem Ventilanschluss 361 eines Neutralventils 360 verbunden. Das Neutralventil 360 wird beispielsweise elektromagnetisch betätigt und weist drei Ventilanschlüsse auf. Auf der dem Ventilanschluss 361 gegenüberliegenden Seite sind ein Ventilanschluss 362 und ein Ventilanschluss 363 ausgebildet, wobei der der Ventilanschluss 362 mit einer Leitung 383 verbunden ist, welche von dem Systemdruck p_3 beaufschlagt wird. Der Systemdruck p_3 ist der höchste Druck im gesamten hydraulischen System. Der Schaltdruck p_1 ist bei einer geschlossenen Kupplung gleich dem Systemdruck p_3. Bis zum Schließen einer Kupplung kann der Schaltdruck p_1, falls dieser gesteuert verändert werden kann, kleiner sein als der konstante Systemdruck p_3. Der Ventilanschluss 363 ist entlüftet. Ist das Neutralventil 360 stromlos, so nimmt dieses die gezeigte Stellung ein und verbindet den Druckraum 327 mit der Entlüftung, wodurch dieser drucklos ist. Eine Kolbenfeder 355, welche sich an der Senkgrundfläche 365 abstützt, drückt den Arretierkolben 351 in Richtung der Verschlussschraube 307. Der Arretierkolben 351 weist eine zylinderische Innenkontur 357 auf, in weicher ein Arretierbolzen 352 von einer Bolzenfeder 358 vorgespannt angeordnet ist. Der Arretierbolzen 352 und die Bolzenfeder 358 sind mittels eines Bolzensicherungsrings 359 im Arretierkolben 351 montiert. Der Arretierbolzen 352 ist hierbei in der zylindrischen Innenkontur 357 längsbeweglich zwischen dem Bolzensicherungsring 359 und einem Absatz 366 sowie in einer Führungsbohrung 272, welche im Steuergehäuse 301 ausgebildet ist, geführt. In dem Arretierbolzen 352 ist in dessen Längsrichtung ein durchgehender Entlüftungskanal 354 ausgebildet. Die Innenkontur 357 und der Arretierbolzen 352 bilden hierbei einen Bolzenfederraum 328, welcher durch den Entlüftungskanal 354 ständig entlüftet ist. Der Bolzenfederraum 328 ist mittels eines am Arretierbolzen 352 angeordneten Dichtrings 353 gegen den Druckraum 327 abgedichtet. Das zum Arretierungszapfen 315 zeigende Ende des Arretierbolzens 352 weist eine halbkugelförmig ausgebildete Bolzenkontur 367 auf.

In der dargestellten Neutralstellung der Arretierungsvorrichtung 350 sind die Kupplungen A und B und damit auch der Druckraum 326 durch die Leitung 381 und die Anschlüsse 231 und 232 entlüftet. Hierdurch drückt die Kolbenfeder 355 den Arretierkolben 351 gegen die Verschlussschraube 307. Das Neutralventil 360 ist stromlos, wodurch der Druckraum 327 durch die Leitung 382 mit dem Ventilanschluss 363 verbunden und damit drucklos ist. Die Bolzenfeder 358 drückt den Arretierbolzen 352 gegen den Bolzensicherungsring 359. Der Arretierbolzen 352 berührt den Arretierungszapfen 315 des sich in Neutralstellung befindlichen Ventilschiebers 310 nicht.

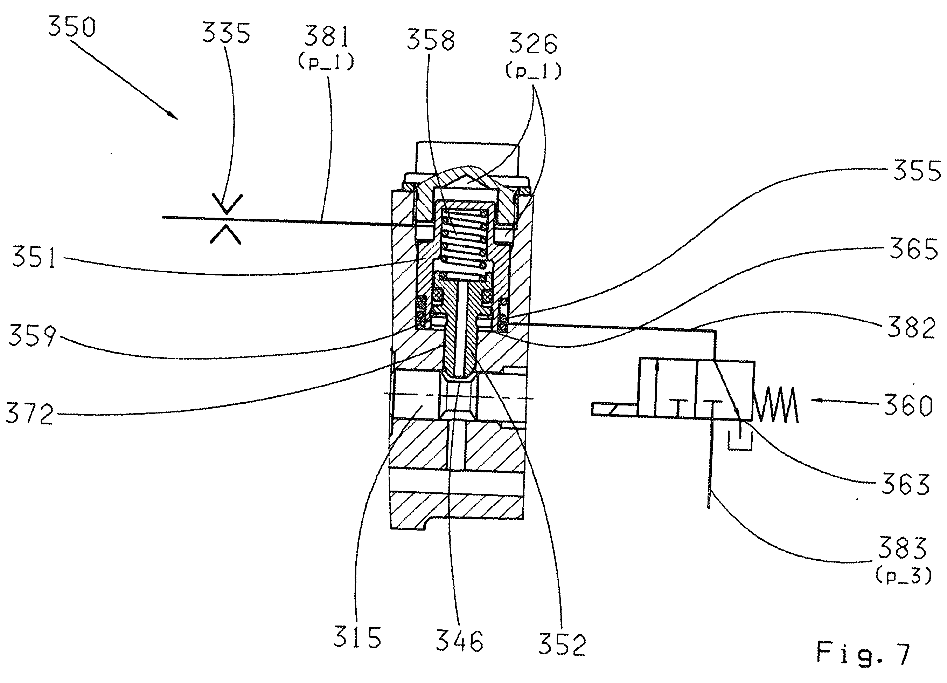

Fig.7 zeigt die formschlüssige Arretierungsvorrichtung 350 in geschaltetem Zustand. Der Ventilschieber 310 nimmt hierbei die in Fig. 3 gezeigte Stellung ein an dem Anschlag 203 ein, wodurch die Kupplung A mit dem Schaltdruck p_1 beaufschlagt wird. Der Anschluss 231 ist durch die Leitung 381 mit dem Druckraum 326 der Arretierungsvorrichtung 350 verbunden, wodurch der Arretierkolben 351 von dem Schaltdruck p_1 beaufschlagt wird. Das Neutralventil 360 ist stromlos und verbindet durch die Leitung 382 den Druckraum 327 mit der Entlüftung am Ventilanschluss 363. Somit drückt der Schaltdruck p_1 im Druckraum 326 den Arretierkolben 351 gegen die Kraft der Kolbenfeder 355 gegen die Senkgrundfläche 365 auf Anschlag. In der oben beschriebenen Schaltstellung des Ventilschiebers 310 befindet sich die Arretiernut 346 unter der Führungsbohrung 372 und der Arretierbolzen 352, welcher sich von der Bolzenfeder 358 vorgespannt in einer Anschlagstellung an dem Sicherungsring 359 befindet, ragt in die Arretiernut 346. Die Längen von Arretierbolzen 352 und Führungsbohrung 372 sowie die Lage des Sicherungsringes 359 sind so gewählt, dass der Arretierbolzen 352 den Grund der Arretiernut 346 nicht berühren und somit keine nachteilige Querkraft auf den Arretierzapfen 315 und damit den Ventilschieber 310 ausüben kann. Damit der Arretierbolzen 352 nach Abschluss des Schaltvorganges in die entsprechende Arretiernut 346 oder 347 einfahren kann, muss der Ventilschieber 310 an seinem jeweiligen Anschlag 203 oder 204 anliegen. Die Blende 335 verzögert beim Schalten einer Kupplung den Druckaufbau in dem Druckraum 326, so dass ein vorzeitiges Auftreffen des Arretierbolzens 352 auf dem Arretierungszapfen 315 verhindert wird.

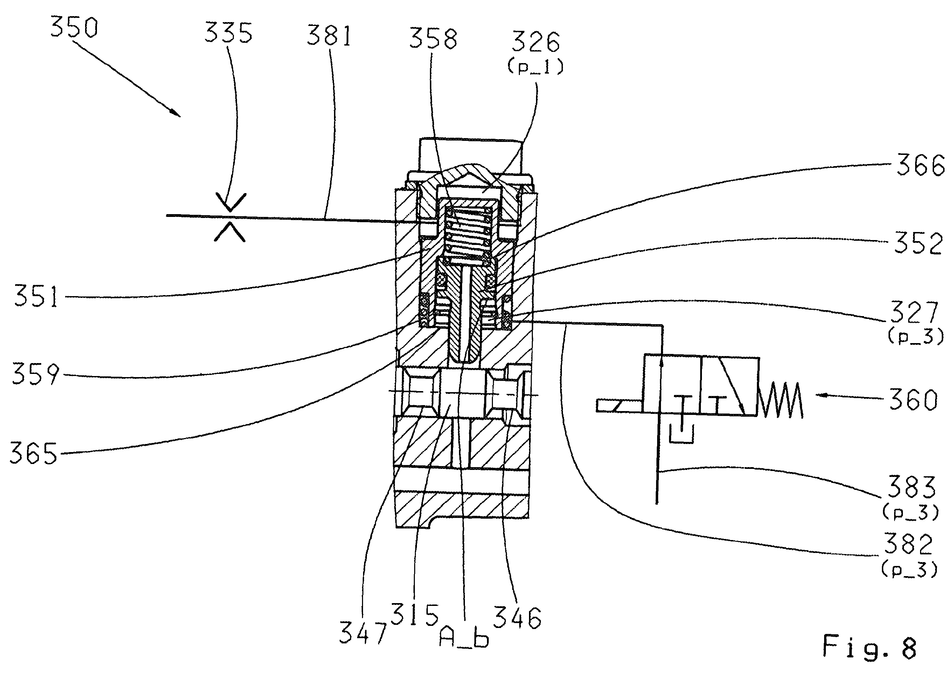

Fig. 8 zeigt die Arretierungsvorrichtung 350 nach dem Lösen der Arretierung, wodurch der Ventilschieber 310 die Neutralstellung eingenommen hat. Soll beispielsweise aus der Schaltstellung, in welcher die Kupplung A oder B geschlossen ist, die Fahrtrichtung gewechselt bzw. in die Neutralstellung zurückgeschaltet werden, muss zunächst die Arretierung des Ventilschiebers 310 gelöst werden. Dies geschieht durch ein Bestromen des Neutralventils 360. Hierdurch nimmt das Neutralventil 360 eine Schaftstellung ein, in welcher der Druckraum 327 durch die Leitung 282 mit der Leitung 383 verbunden ist und damit mit dem Systemdruck p_3 beaufschlagt wird. Der Druckraum 326 ist in der Schaltstellung einer Kupplung von dem Schaltdruck p_1 beaufschlagt. Die Federkennlinie der Bolzenfeder 358 ist unter Berücksichtigung einer druckbeaufschlagbaren Bolzenringfläche A_b so gewählt, dass der Systemdruck p_3 den Arretierbolzen 352 entgegen der Kraft der Bolzenfeder 358 gegen den Absatz 366 drücken kann. Dabei bleibt der Arretierkolben 351 in seiner Anschlagposition an der Senkgrundfläche 365. Der Hub des Arretierbolzens 352 zwischen dem Sicherungsring 359 und dem Absatz 366 ist so gewählt, dass der Arretierbolzen 352 in der Anschlagposition am Absatz 366 sicher aus der Arretiernut 346 oder 347 gefahren wurde. Da bei der Ansteuerung von Neutral der Steuerdruckraum 228 durch das jeweilige Vorsteuerventil entlüftet, kann der Ventilschieber 310 nach dem Lösen der Arretierung von der Kraftwirkung der Zentrierfeder 236 in die dargestellte Neutralstellung bewegt werden.

Sollte im Betrieb beispielsweise bei geschalteter Kupplung A der Strom ausfallen, entlüftet das entsprechende nicht gezeigte Vorsteuerventil den Steuerdruckraum 228. Auf den Ventilschieber 310 wirkt nun nur noch die Rückstellkraft der Zentrierfeder 236, welche den Ventilschieber 310 in die Neutralstellung bewegen will. Durch das stromlose Neutralventil 360 wird der Druckraum 327 weiterhin entlüftet und der Druckraum 326 bleibt durch den Anschluss 231 und die Leitung 381 weiterhin mit dem Schaltdruck p_1 beaufschlagt, so dass der Arretierbolzen 352 in der Arretiernut 346 bleibt. Hierdurch wird wie gewünscht eine mögliche Axialbewegung des Ventilschiebers 310 entgegen der Rückstellkraft der Zentrierfeder 236 blockiert.

Beim beabsichtigten oder unbeabsichtigten Abstellen des Motors muss der Ventilschieber 310 in Neutralstellung schalten, da ein Anlassen des Motors bei eingelegtem Gang nicht möglich ist. Mit dem Abstellen des Motors bleibt auch die nicht dargestellte Getriebepumpe stehen, wodurch kein Druck mehr erzeugt wird und alle Getriebedrücke sich durch Leckagestellen nach hinreichend langer Zeit bis auf Umgebungsdruck abbauen. Wenn sich der im Druckraum 326 wirkende Schaltdruck p_1 abbaut, überwiegt ab einem Grenzwert die Kraft der Kolbenfeder 355 und drückt den Arretierkolben 351 gegen seinen Anschlag an der Verschlussschraube 307 und die Arretierung ist gelöst. Da am Ventilschieber 310 aufgrund der sich abbauenden Drücke keine oder nur noch geringe hydraulische Kräfte angreifen, wird dieser von der Zentrierfeder 236 in die Neutralstellung bewegt.

Es kann theoretisch der Fall eintreten, dass sich bei einer gewünschten Umschaltung von der Kupplung A nach Neutral, bzw. auf die Kupplung B das Neutralventil 360 nicht bestromen lässt, wodurch der Druckraum 326 weiterhin von dem Schaltdruck p_1 beaufschlagt ist und damit der Arretierbolzen 352 in die Arretiernut ragt und den Ventilschieber 310 arretiert. Um trotzdem eine Umschaltung der Fahrtrichtung zu ermöglichen, sind die fasenartigen Nutschrägen 349 in ihrer Neigung so gewählt, dass in deren Zusammenwirken mit der Bolzenkontur 367 die Kraftwirkung des Steuerdrucks p_2 auf den Ventilschieber 310 ausreicht, um den Arretierbolzen 352 gegen die Bolzenfeder 358 zurück zu drücken und den Ventilschieber 310 in die Schaltstellung zum Schließen der Kupplung B zu bewegen. Dieser Vorgang wird auch als Überdrücken der Arretierungsvorrichtung 350 bezeichnet. Alternativ kann das Ende des Arretierbolzens 352 auch eine fasenartige Abschrägung aufweisen.

Ist keine Möglichkeit des Überdrückens gefordert, kann der Arretierbolzen 352 auch fest am Arretierkolben 351 angeordnet sein, wie dies in der Arretierungsvorrichtung 250 ausgeführt ist. Das Ende des Arretierbolzens 352 weist in diesem Falle eine zylindrische Form mit einer planen Fläche auf. Darüber hinaus müssen die Arretiernuten 346 und 347 keine Nutschrägen 349 aufweisen, sondern können als einfache, radial verlaufende Einstiche in den Arretierzapfen 315 des Ventilschiebers 310 ausgestaltet sein.

Alle Schaltvorgänge von der zweiten Kupplung B in die Neutralstellung bzw. zur ersten Kupplung A erfolgen analog.

### Bezuqszeichen

- 100: Schaltventil einer Schiffsgetriebesteuerung
- 101: Steuergehäuse
- 103: Anschlag
- 104: Anschlag
- 105: Gehäuseanschlag
- 106: Gehäuseanschlag
- 109: Ventilbohrung
- 110: Ventilschieber
- 111: Kolbenabschnitt
- 112: Kolbenabschnitt
- 113: Kolbenabschnitt
- 114: Kolbenabschnitt
- 115: Mantelfläche Kolbenabschnitt 114
- 121: Druckraum
- 122: Druckraum
- 123: Druckraum
- 124: Druckraum
- 125: Druckraum
- 128: Steuerdruckraum
- 129: Steuerdruckraum
- 130: Steuerdruckraum
- 131: Druckraum
- 132: Druckraum
- 137: Hülse
- 138: Hülse
- 143: Neutralschalter
- 146: Arretiernut
- 147: Arretiernut
- 148: Arretiernut
- 150: Arretierungsvorrichtung
- 152: Arretierstift
- 155: Arretierfeder
- 159: Kugelknopf
- 200: Schaltventil einer Schiffsgetriebesteuerung
- 201: Steuergehäuse
- 203: Anschlag
- 204: Anschlag
- 205: Verschlussschraube
- 206: Verschlussschraube
- 207: Verschlussschraube
- 208: Anschlagkante
- 209: Ventilschieberbohrung
- 210: Ventilschieber
- 211: Kolbenabschnitt
- 212: Kolbenabschnitt
- 213: Kolbenabschnitt
- 214: Zentrierfederzapfen
- 215: Arretierungszapfen
- 221: Druckraum
- 222: Druckraum
- 223: Druckraum
- 224: Druckraum
- 225: Druckraum
- 226: Druckraum
- 227: Druckraum
- 228: Steuerdruckraum
- 229: Steuerdruckraum
- 231: Anschluss
- 232: Anschluss
- 234: Durchbruch
- 235: Blende
- 236: Zentrierfeder
- 237: Federscheibe
- 238: Federscheibe
- 239: Sicherungsring
- 241: Taststift
- 242: Schalterfeder
- 243: Neutralschalter
- 244: Führungsbohrung
- 245: Positionsnut
- 250: Arretierungsvorrichtung
- 251: Arretierkolben
- 252: Arretierbolzen
- 253: Dichtring
- 254: Entlüftungskanäle
- 255: Kolbenfeder
- 256: Senkbohrung
- 260: Neutralventil
- 261: Ventilanschluss
- 262: Ventilanschluss
- 265: Senkgrundfläche
- 271: Führungsbohrung
- 272: Führungsbohrung
- 281: Leitung
- 282: Leitung
- 300: Schaltventil einer Schiffsgetriebesteuerung
- 301: Steuergehäuse
- 307: Verschlussschraube
- 310: Ventilschieber
- 315: Arretierzapfen
- 326: Druckraum
- 327: Druckraum
- 328: Bolzenfederraum
- 335: Blende
- 345: Positionsnut
- 346: Arretiernut
- 347: Arretiernut
- 349: Nutschräge
- 350: Arretierungsvorrichtung
- 351: Arretierkolben
- 352: Arretierbolzen
- 353: Dichtring
- 354: Entlüftungskanal
- 355: Kolbenfeder
- 356: Senkbohrung
- 357: Innenkontur
- 358: Bolzenfeder
- 359: Bolzensicherungsring
- 360: Neutralventil
- 361: Ventilanschluss
- 362: Ventilanschluss
- 363: Ventilanschluss
- 365: Senkgrundfläche
- 367: Bolzenkontur
- 372: Führungsbohrung
- 381: Leitung
- 382: Leitung
- 383: Leitung
- 366: Absatz
- A_a: Arretierkolbenfläche
- A_b: Bolzenringfläche
- F_a: Reibkraft
- F_s: Steuerdruckkraft
- F_z: Zentrierkraft

- p_1: Schaltdruck
- p_2: Steuerdruck
- p_3: Systemdruck

- A: Kupplung
- B: Kupplung

## Patentansprüche

1. Hydraulische Schiffsgetriebesteuerung, mindestens ein Schaltventil (100, 200, 300) umfassend, in welchem ein Ventilschieber (110, 210, 310) zum Verschließen mindestens eines Druckraums oder zur Verbindung mindestens eines Druckraumes (121, 221) mit mindestens einem weiteren Druckraum (122, 123, 124, 125, 222, 223, 224, 225) oder mit mindestens einem Aktuator (A, B) in unterschiedliche Schaltstellungen entlang seiner Längsachse verschiebbar ist, wobei in der hydraulischen Steuerung eine Arretierungsvorrichtung (150, 250, 350) zur Arretierung des VentilsChiebers in dessen zuvor eingenommenen Schaltstellung bei einem Stromausfall angeordnet ist, **dadurch gekennzeichnet, dass** die Betätigung der Arretierungsvorrichtung (250, 350) hydraulisch wirksam ist, die Arretierungsvorrichtung vor einer Verschiebung des Ventilschiebers (210, 310) zur Ausführung eines Schaltvorganges lösbar ist, und dass die Arretienrngsvorrichtung (250, 350) bei einem Absinken eines Druckes (p_3) im hydraulischen System unter einen unteren Grenzwert selbsttätig lösend ist.

2. Hydraulische Schiffsgetriebesteuerung nach Anspruch 1, **dadurch gekennzeichnet, dass** die Arretiervorrichtung (250, 350) mindestens einen Arretierkolben (251, 351) und mindestens eine den Arretierkolben vorspannende Feder (255, 355) umfasst, wobei der Arretierkolben in einer Bohrung (256, 356) geführt ist und wobei die Längsachse des Arretierkolbens quer zur Längsachse des Ventilschiebers (210, 310) angeordnet ist.

3. Hydraulische Schiffsgetriebesteuerung nach mindestens einem der Ansprüche 1 und 2, **dadurch gekennzeichnet, dass** die Arretierung des Ventilschiebers (210) als reibschlüssige Verbindung zwischen einem Arretierbolzen (252) und dem Ventilschieber (210, 215) ausgeführt ist.

4. Hydraulische Schiffsgetriebesteuerung nach mindestens einem der Ansprüche 1 und 2, **dadurch gekennzeichnet, dass** die Arretierung eines Ventilschiebers (310) als formschlüssige Verbindung zwischen einem Ametierbolzen (352) und dem Ventilschiebers (310, 315, 346, 347) ausgeführt ist.

5. Hydraulische Schiffsgetriebesteuerung nach mindestens einem der vorangegangenen Ansprüche, **dadurch gekennzeichnet, dass** der Arretierbolzen (252) in Richtung der Längsachse des Arretierkolbens (251) an einem ersten Ende des Arretierkolbens ausgebildet ist, wobei die Längsachse des Arretierkolbens quer zur Längsachse des Ventilschiebers (210) angeordnet ist.

6. Hydraulische Schiffsgetriebesteuerung nach mindestens einem der Ansprüche 2 und 4, **dadurch gekennzeichnet, dass** der Arretierbolzen (352) konzentrisch zum Arretierkolben (351) und in diesem längsbeweglich geführt angeordnet ist und von einer zweiten Feder (358) gegen einen am Arretierkolben (351) ausgebildeten Anschlag (359) vorgespannt ist.

7. Hydraulische Schiffsgetriebesteuerung nach einem der Ansprüche 3 oder 4, **dadurch gekennzeichnet, dass** von einer ersten Seite des Arretierkolbens (251, 351) und einer ersten Innenkontur (258, 356, 207, 307) ein erster Druckraum (226, 326) und von einer zweiten Seite des Arretierkolbens und einer zweiten Innenkontur (256, 356, 265, 365) ein zweiter Druckraum (227, 327) gebildet ist.

8. Hydraulische Schiffsgetriebesteuerung nach mindestens einem der vorangegangenen Ansprüche, **dadurch gekennzeichnet, dass** der erste Druckraum (226) der Arretierungsvorrichtung (250) mit einem Wegeventil (260) verbunden ist und parallel zu diesem in einer ersten Schaltstellung des Ventilschlebers (210) mit mindestens einem entlüfteten Druckraum (224, 225) und in mindestens einer zweiten Schaltstellung des Ventilschiebers mit mindestens einem druckbeaufschlagten Aktuator (A, B) verbunden ist.

9. Hydraulische Schiffsgetriebesteuerung nach Anspruch 8, **dadurch gekennzeichnet, dass** der zweite Druckraum (227) der Arretierungsvorrichtung (250) in einer ersten Stellung des Arretierkolbens (251) einen gleichen oder höheren Druck aufweist wie der erste Druckraum (226) und in einer zweiten Stellung des Arretierkolbens einen geringeren Druck aufweist wie der erste Druckraum.

10. Hydraulische Schiffsgetriebesteuerung nach mindestens einem der vorangegangenen Ansprüche, **dadurch gekennzeichnet, dass** der erste Druckraum (326) der Arretierungsvorrichtung (350) in einer ersten Schaltstellung des Ventilschiebers (310) mit mindestens einem entlüfteten Druckraum (224, 225) und in mindestens einer zweiten Schaltstellung des Ventilschiebers mit mindestens einem druckbeaufschlagten Aktuator (A, B) verbunden ist, und dass der zweite Druckraum (327) der Arretierungsvorrichtung (350) mit einem Wegeventil (360) verbunden ist, wobei der zweite Druckraum (327) je nach Schaltstellung des Wegeventils (360) entlüftet oder mit einem Druck (p_3) beaufschlagt ist.

## Claims

1. Hydraulic marine-vessel transmission controller, comprising at least one shift valve (100, 200, 300), in which a valve slide (110, 210, 310) can be displaced into different shift positions along its longitudinal axis in order to close at least one pressure space or in order to connect at least one pressure space (121, 221) to at least one further pressure space (122, 123, 124, 125, 222, 223, 224, 225) or to at least one actuator (A, B), a locking device (150, 250, 350) being arranged in the hydraulic controller in order to lock the valve slide in its previously assumed shift position in the event of a power failure, **characterized in that** the actuation of the locking device (250, 350) is hydraulically active, the locking device can be released before a displacement of the valve slide (210, 310) in order to perform a shift operation, and **in that** the locking device (250, 350) releases automatically if a pressure (p_3) in the hydraulic system drops below a lower limiting value.

2. Hydraulic marine-vessel transmission controller according to Claim 1, **characterized in that** the locking device (250, 350) comprises at least one locking piston (251, 351) and at least one spring (255, 355) which prestresses the locking piston, the locking piston being guided in a hole (256, 356), and the longitudinal axis of the locking piston being arranged transversely with respect to the longitudinal axis of the valve slide (210, 310).

3. Hydraulic marine-vessel transmission controller according to at least one of Claims 1 and 2, **characterized in that** the locking means of the valve slide (210) is configured as a frictional connection between a locking pin (252) and the valve slide (210, 215).

4. Hydraulic marine-vessel transmission controller according to at least one of Claims 1 and 2, **characterized in that** the locking means of a valve slide (310) is configured as a positively locking connection between a locking pin (352) and the valve slide (310, 315, 346, 347).

5. Hydraulic marine-vessel transmission controller according to at least one of the preceding claims, **characterized in that** the locking pin (252) is configured in the direction of the longitudinal axis of the locking piston (251) at a first end of the locking piston, the longitudinal axis of the locking piston being arranged transversely with respect to the longitudinal axis of the valve slide (210).

6. Hydraulic marine-vessel transmission controller according to at least one of Claims 2 and 4, **characterized in that** the locking pin (352) is arranged concentrically with respect to the locking piston (351) and such that it is guided longitudinally movably in the latter, and is prestressed by a second spring (358) against a stop (359) which is formed on the locking piston (351).

7. Hydraulic marine-vessel transmission controller according to either of Claims 3 and 4, **characterized in that** a first pressure space (226, 326) is formed by a first side of the locking piston (251, 351) and a first inner contour (256, 356, 207, 307), and a second pressure space (227, 327) is formed by a second side of the locking piston and a second inner contour (256, 356, 265, 265).

8. Hydraulic marine-vessel transmission controller according to at least one of the preceding claims, **characterized in that** the first pressure space (226) of the locking device (250) is connected to a directional valve (260) and, parallel to this, is connected to at least one ventilated pressure space (224, 225) in a first shift position of the valve slide (210) and is connected to at least one pressure-loaded actuator (A, B) in at least one second shift position of the valve slide.

9. Hydraulic marine-vessel transmission controller according to Claim 8, **characterized in that** the second pressure space (227) of the locking device (250) has an identical or higher pressure in a first position of the locking piston (251) than the first pressure space (226), and has a lower pressure in a second position of the locking piston than the first pressure space.

10. Hydraulic marine-vessel transmission controller according to at least one of the preceding claims, **characterized in that** the first pressure space (326) of the locking device (350) is connected to at least one ventilated pressure space (224, 225) in a first shift position of the valve slide (310) and is connected to at least one pressure-loaded actuator (A, B) in at least one second shift position of the valve slide, and **in that** the second pressure space (327) of the locking device (350) is connected to a directional valve (360), the second pressure space (327) being ventilated or loaded with a pressure (p_3) depending on the shift position of the directional valve (360).

## Revendications

1. Commande de transmission hydraulique de bateau, comprenant au moins une soupape de commutation (100, 200, 300), dans laquelle un tiroir de soupape (110, 210, 310) pour fermer au moins un espace de pression ou pour connecter au moins un espace de pression (121, 221) à au moins un autre espace de pression (122, 123, 124, 125, 222, 223, 224, 225) ou à au moins un actionneur (A, B) peut être déplacé dans différentes positions de commutation le long de son axe longitudinal, un dispositif de blocage (150, 250, 350) pour bloquer le tiroir de soupape dans sa position de commutation adoptée précédemment dans le cas d'une panne de courant étant disposé dans la commande hydraulique, **caractérisée en ce que** l'actionnement du dispositif de blocage (250, 350) est hydraulique, le dispositif de blocage peut être desserré avant un déplacement du tiroir de soupape (210, 310) pour effectuer une opération de commutation et le dispositif de blocage (250, 350), dans le cas d'une baisse de pression (p_3) dans le système hydraulique, se desserre automatiquement en dessous d'une valeur limite inférieure.

2. Commande de transmission hydraulique de bateau selon la revendication 1, **caractérisée en ce que** le dispositif de blocage (250, 350) comprend au moins un piston de blocage (251, 351) et au moins un ressort (255, 355) précontraignant le piston de blocage, le piston de blocage étant guidé dans un alésage (256, 356) et l'axe longitudinal du piston de blocage étant disposé transversalement à l'axe longitudinal du tiroir de soupape (210, 310).

3. Commande de transmission hydraulique de bateau selon au moins l'une quelconque des revendications 1 et 2, **caractérisée en ce que** le blocage du tiroir de soupape (210) est réalisé sous forme de connexion par engagement par friction entre un boulon de blocage (252) et le tiroir de soupape (210, 215).

4. Commande de transmission hydraulique de bateau selon au moins l'une quelconque des revendications 1 et 2, **caractérisée en ce que** le blocage d'un tiroir de soupape (310) est réalisé sous forme de connexion par engagement positif entre un boulon de blocage (352) et le tiroir de soupape (310, 315, 346, 347).

5. Commande de transmission hydraulique de bateau selon au moins l'une quelconque des revendications précédentes, **caractérisée en ce que** le boulon de blocage (252) est réalisé dans la direction de l'axe longitudinal du piston de blocage (251) sur une première extrémité du piston de blocage, l'axe longitudinal du piston de blocage étant disposé transversalement à l'axe longitudinal du tiroir de soupape (210).

6. Commande de transmission hydraulique de bateau selon au moins l'une quelconque des revendications 2 et 4, **caractérisée en ce que** le boulon de blocage (352) est disposé de manière concentrique au piston de blocage (351) et est guidé de manière déplaçable longitudinalement dans celui-ci, et est précontraint par un deuxième ressort (358) contre une butée (359) réalisée sur le piston de blocage (351).

7. Commande de transmission hydraulique de bateau selon l'une quelconque des revendications 3 ou 4, **caractérisée en ce qu'**un premier espace de pression (226, 326) est formé par un premier côté du piston de blocage (251, 351) et un premier contour intérieur (256, 356, 207, 307), et un deuxième espace de pression (227, 327) est formé par un deuxième côté du piston de blocage et un deuxième contour intérieur (256, 356, 265, 365).

8. Commande de transmission hydraulique de bateau selon au moins l'une quelconque des revendications précédentes, **caractérisée en ce que** le premier espace de pression (226) du dispositif de blocage (250) est connecté à une soupape à tiroir (260) et est connecté parallèlement à celle-ci dans une première position de commutation du tiroir de soupape (210) à au moins un espace de pression désaéré (224, 225) et dans au moins une deuxième position de commutation du tiroir de soupape à au moins un actionneur (A, B) sollicité en pression.

9. Commande de transmission hydraulique de bateau selon la revendication 8, **caractérisée en ce que** le deuxième espace de pression (227) du dispositif de blocage (250) présente, dans une première position du piston de blocage (251), une pression identique ou supérieure au premier espace de pression (226), et dans une deuxième position du piston de blocage, une pression inférieure au premier espace de pression.

10. Commande de transmission hydraulique de bateau selon au moins l'une quelconque des revendications précédentes, **caractérisée en ce que** le premier espace de pression (326) du dispositif de blocage (350) est connecté dans une première position de commutation du tiroir de soupape (310) à au moins un espace de pression désaéré (224, 225), et dans au moins une deuxième position de commutation du tiroir de soupape, à au moins un actionneur (A, B) sollicité en pression, et **en ce que** le deuxième espace de pression (327) du dispositif de blocage (350) est connecté à une soupape à tiroir (360), le deuxième espace de pression (327) étant désaéré en fonction de la position de commutation de la soupape à tiroir (360) ou étant sollicité par une pression (p_3).
